# EUROPÄISCHE PATENTSCHRIFT

(11) **EP 1 986 021 B1**
(45) Veröffentlichungstag und Bekanntmachung des Hinweises auf die Patenterteilung: **23.01.2013**
(21) Anmeldenummer: 08103302.9
(22) Anmeldetag: 01.04.2008
(51) Int. Cl.: G01S 13/58, G01S 13/32

(54) **Verfahren und Vorrichtung zur Bestimmung der Relativgeschwindigkeit von Objekten**
Method and device for calculating the relative speed of objects
Procédé et dispositif destinés à la détermination de la vitesse relative d'objets

(30) Priorität: 10.08.2007 DE 102007037864; 23.04.2007 DE 102007019426
(43) Veröffentlichungstag der Anmeldung: 29.10.2008
(73) Patentinhaber: ROBERT BOSCH GMBH, 70442 Stuttgart (DE)
(72) Erfinder: Schoeberl, Thomas, 31139 Hildesheim (DE)

(56) Entgegenhaltungen:
- EP-A- 0 809 118
- DE-A1- 10 329 569
- DE-A1-102005 012 945
- GB-A- 2 024 557
- US-A- 3 188 635
- US-A- 4 042 925
- US-A- 5 646 626

## Beschreibung

Die vorliegende Erfindung betrifft eine Vorrichtung und ein Verfahren zur Bestimmung der Relativgeschwindigkeit von Objekten mittels ausgesendeter und empfangener Mikrowellenstrahlung, wobei das Sendesignal eine Trägerfrequenz aufweist, die rampenförmig erhöht oder verringert wird, wobei das Sendesignal zusätzlich mittels einer PN-Codefolge moduliert wird und das Empfangssignal mit der zeitlich verzögerten PN-Codefolge gemischt wird und anschließend integriert wird. Dabei wird die Relativgeschwindigkeit der Objekte aus dem zeitlichen Verlauf des Korrelationsergebnisses der gemischten und integrierten Empfangssignale bestimmt und optional die Entfernung der Objekte aus der zeitlichen Verzögerung der PN-Codefolge bestimmt.

### Stand der Technik

Aus der DE 10 2005 012 945 A1 ist ein Verfahren und eine Vorrichtung zur Abstands- und Relativgeschwindigkeitsmessung von mehreren Objekten mittels eines FMCW-Radars bekannt, in dem Sendesignale mit zeitlich linearen Rampensteigungen abgestrahlt werden und die an Objekten reflektierten Empfangssignale empfangen werden und mit den Sendesignalen gemischt werden. Den Mischerausgangsfrequenzen einer jeden Frequenzrampe für jedes Objekt wird eine Kombination von Abstands- und Relativgeschwindigkeitswerten zugeordnet und aus Schnittpunkten mehrerer Abstands- und Relativgeschwindigkeitskombinationen der Abstand und die Relativgeschwindigkeit eines möglichen Objekts bestimmt, wobei die möglichen Objekte in Folge von Mehrdeutigkeiten Scheinobjekte oder reale Objekte sein können. Diese Scheinobjekte in Folge der Mehrdeutigkeiten werden eliminiert, indem in einem darauf folgenden Messzyklus die Frequenzsteigung mindestens einer Frequenzrampe nach dem Zufallsprinzip geändert wird.

Aus der DE 103 29 569 A1 ist eine Vorrichtung zur Detektion von Objekten in einem Erfassungsbereich bekannt, bei der Radarimpulse mittels eines Sendekanals ausgesendet werden und an den Objekten reflektierte Impulse mittels eines Empfangskanals empfangen werden. Hierzu ist im Empfangskanal ein Verzögerungsmittel vorgesehen, mittels dem Impulse, die im Empfangszweig mit den Empfangssignalen gemischt werden, gegenüber den Sendeimpulsen variabel verzögerbar sind. Weiterhin ist vorgesehen, dass für jeden Verzögerungswert des Verzögerungsmittels Impulse mit mindestens zwei unterschiedlichen Trägerfrequenzen ausgesandt werden, wobei die Trägerfrequenzen von der Messentfernung und damit von dem Verzögerungswert abhängig sind.

Aus der GB 2 024 553 A ist ein FM-CW-Radarsystem zur Bestimmung der Relativgeschwindigkeit mittels ausgesendeter und empfangener Mikrowellenstrahlung bekannt. Dabei ist das Sendesignal FM-CW-moduliert und mit einer PN-Codefolge überlagert. Für das Empfangssignal wird ein Korrelationsgewinn gebildet, wobei die Relativgeschwindigkeit der Objekte mittels Dopplerdetektion aus dem Ausgangssignal ermittelt wird. Der Korrelationsgewinn wird dadurch ermittelt, dass ein Teil des Ausgangssignals einem Mischer zugeführt wird, dem das empfangene Signal zugeführt wird. Der Mischer ist mit einer Filterbank verbunden, wobei einzelne Mischer der Filterbank einen Entfernungsbereich repräsentieren. Ferner wird das Ausgangssignal des Mischers in bekannter Weise zur Bestimmung der Geschwindigkeit des Ziels mittels des Dopplereffekts herangezogen.

Aus der US 3,188,635 ist ein Radarsystem bekannt, dessen Sendesignal ein mit einem PN-Code überlagertes Sägezahnsignal aufweist. Das von einem Objekt reflektierte Empfangssignal wird einer Vielzahl von Mischern zugeführt. Ferner sind die Mischer mit einer Verzögerungseinrichtung verbunden, die ein für jeden Mischer zeitlich abgestimmtes Vergleichssignal bereitstellt. Jeder Mischer ist dabei mit einer Vielzahl von Filtern verbunden. Der Mischer mischt das empfangene Signal mit dem für den Mischer bereitgestellten Vergleichssignal und führt es den Filtern zu. Durch das zeitlich verzögerte Vergleichssignal zeigt die Antwort des für einen Entfernungsbereich korrespondierenden Mischers an, in welchem Entfernungsbereich sich das Objekt aufhält und durch die Filterung zeigt der korrespondierende Filter des korrespondierenden Mischers an, welche Relativgeschwindigkeit das Objekt aufweist.

Aus der US 4,042,925 ist ein CW-Radarsystem bekannt, bei dem das Ausgangssignal durch eine PN-Codefolge überlagert wird. Das ausgesendete Signal wird von einem Objekt reflektiert und von einem Empfänger empfangen. Das Empfangssignal wird zur Auswertung konvertiert und verschiedenen Empfangskanälen zugeführt. Diese weisen zahlreiche Kanäle auf, wobei jeder Kanal einen zweiphasigen Demodulator umfasst, der jeweils um ein Bit gegenüber dem vorhergehenden Kanal versetzt arbeitet. Jedem Demodulator wird ein jeweils um ein Bit verzögerter Referenzcode zugeführt, der durch ein Register erzeugt wird. Das Register wird mit der PN-Codefolge gesteuert. Zur Auswertung wird eine Fourier-Transformation durchgeführt, um die Entfernung und die Korrelation zum ausgesendeten Signal zum empfangenen Signal zu ermitteln.

### Offenbarung der Erfindung

Der Kern der vorliegenden Erfindung ist es, ein Radarsystem anzugeben, bei dem eine Modulation mittels eines Pseudo Noise (PN)-Codes erfolgt und bei dem die Verschlechterung des Korrelationsgewinns bei bewegten Zielen verändert wird und der Verdeckungseffekt von schwachen Zielen bei zu stark bewegten Zielen kompensiert wird. Weiterhin wird auf Grund der Bestimmung des zeitlichen Verlaufs des Korrelationsgewinns ermöglicht, die relative Geschwindigkeit von Objekten, die sich innerhalb einer zu untersuchenden Entfernung befinden, zu ermitteln. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafter Weise wird bei dem erfindungsgemäßen System die Entfernung der Objekte aus der zeitlichen Verzögerung der PN-Codefolge des Empfangszweigs bestimmt und die Relativgeschwindigkeit der Objekte aus dem zeitlichen Verlauf des Korrelationsergebnisses der mit dem Sendesignal gemischten Empfangssignale und der Integration der Ausgangssignale der Mischer ermittelt.

Weiterhin vorteilhaft ist es, die Integration der Ausgangssignale der Mischer zur Bestimmung des Korrelationsgewinns über eine Zeitdauer durchzuführen, die der zeitlichen Länge eines PN-Codes entspricht.

Weiterhin ist es vorteilhaft, dass die zeitliche Verzögerung des PN-Codes derart verändert wird, dass unterschiedliche Entfernungsbereiche stufenweise nacheinander nach Objekten durchsucht werden. Hierdurch ist es möglich, innerhalb einer gewissen Zeitdauer den zu durchsuchenden Entfernungsbereich d konstant zu halten und die darin detektierten Objekte auf Grund des Korrelationsergebnisses zu detektieren und deren Relativgeschwindigkeiten Vr zu ermitteln.

Besonders vorteilhaft ist es, dass die Zeitdauer, innerhalb der die zeitliche Verzögerung der PN-Codefolge konstant ist um einen bestimmten Entfernungsbereich zu durchsuchen, ein ganzzahliges Vielfaches der Gesamtzeitdauer der PN-Codefolge beträgt. Hierdurch ist es möglich, die sich ständig wiederholende PN-Codefolge hintereinander zu wiederholen, so dass mit Beginn der Messung im nächsten Entfernungsbereich die PN-Codefolge mit der Änderung des zu messenden Entfernungsbereichs synchron ist und gemeinsam beginnt.

Weiterhin ist es vorteilhaft, dass das Korrelationsergebnis eines Entfernungsbereichs mit einer Abtastfrequenz f_{abtast} abgetastet wird. Die Abtastung des Korrelationsergebnisses eines Entfernungsbereichs wird hierbei über eine bestimmte Anzahl mit sich wiederholenden PN-Codefolgen durchgeführt.

Dabei kann vorgesehen sein, dass die Anzahl der PN-Codefolgen pro durchsuchtem Entfernungsbereich größer ist als die infolge der Abtastfrequenz f_{abtast} vergleichbare Anzahl an PN-Codefolgen.

Die Zeitdauer T_{abtast}., während der die Ausgangssignale abgetastet werden, kann vorteilhafterweise ein ganzzahliges Vielfaches der Zeitdauer einer PN-Codefolge betragen, wobei die Zeitdauer T_{abtast} weiterhin kürzer ist als die Zeitdauer, während der ein Entfernungsbereich d durchsucht wird und während der die Zeitverzögerung τ konstant bleibt.

Dabei ist es wiederum besonders vorteilhaft, dass sich die Abtastfrequenz f_{abtast} in Abhängigkeit eines vorbestimmten Auflösungsvermögens der gemessenen Relativgeschwindigkeit Vr bestimmt. Hierbei kann die zuvor gemessene Relativgeschwindigkeit Vr herangezogen werden und diese als Ausgangsgröße verwendet werden um die Abtastfrequenz f_{abtast} so zu wählen, dass bei großen zu erwartenden Relativgeschwindigkeiten Vr, bei denen sich größere Dopplerfrequenzverschiebungen ergeben, geringer gewählt wird, als bei geringen Relativgeschwindigkeiten Vr.

Weiterhin ist es vorteilhaft, dass das Empfangssignal und die verzögerte PN-Codefolge einem Inphasenkanal und einem Quadraturkanal zugeführt werden, wobei die verzögerte PN-Codefolge des Quadraturkanals gegenüber der verzögerten PN-Codefolge des Inphasenkanals um 90° verdreht ist und in jedem Kanal getrennt eine Abmischung, Integration und Bestimmung des Korrelationsgewinns durchgeführt wird. Hierbei kann verhindert werden, dass Verdeckungen auf Grund der Phasenlage der Signalanteile entstehen und auf Grund der beiden zueinander orthogonalen Signale ein Realteil und ein Imaginärteil für den Korrelationsgewinn bestimmt werden kann.

Weiterhin ist es vorteilhaft, dass aus den Korrelationsergebnissen des Inphasenkanals und des Quadraturkanals eines jeden Entfernungsbereichs ein komplexer Korrelationsgewinn bestimmt wird. Die zeitliche Anfolge des komplexen Korrelationsgewinns kann mittels einer Fouriertransformation in den Frequenzbereich transformiert werden. Durch die Berechung des komplexen Korrelationsgewinns ist es weiterhin möglich, die komplexe Phase des Korrelationsgewinns im Frequenzbereich zu analysieren und aus dem Phasenverlauf die Relativgeschwindigkeiten Vr für jedes detektierte Objekt zu ermitteln. Besonders vorteilhaft ist es, dass jedem Maximum des fouriertransformierten Frequenzspektrums jeweils ein Objekt und dessen Relativgeschwindigkeit Vr zugeordnet werden kann. Weiterhin ist es vorteilhaft, dass aus dem Verlauf der Phase zwischen dem Korrelationsgewinn des Inphasenkanals und dem Korrelationsgewinn des Quadraturkanals die Relativgeschwindigkeit Vr des detektierten Objekts bestimmt wird.

Weiterhin ist es vorteilhaft, dass durch die Parallelisierung des Mischers und der Integratoren und somit der parallelen Ermittlung des Korrelationsergebnisses für mehrere Distanzen die Messzeit verkürzt wird.

Weiterhin ist es ebenso vorteilhaft, dass mehrere Integrationen in Abhängigkeit der Länge des PN-Codes und der Abtastfrequenz f_{abtast} die einzelnen PN-Codes der unterschiedlichen Entfernungsbereiche ineinander verschachtelt sind und somit mittels je eines Integrators im Inphasenkanal und im Quadraturkanal mehrere Korrelationsergebnisse gleichzeitig berechnet werden können, wodurch sowohl Hardwareaufwand eingespart wird, sowie auch die Messzeit für die Berechnung der Korrelation reduziert wird.

### Kurze Beschreibung der Zeichnungen

Nachfolgend wird ein Ausführungsbeispiel der Erfindung anhand von Zeichnungen erläutert. Es zeigen
- Figur 1: ein Blockschaltbild einer Ausführungsform der erfindungsgemäßen Vorrichtung,
- Figur 2: ein Blockschaltbild einer weiteren Ausführungsform der erfindungsgemäßen Vorrichtung,
- Figur 3: eine Ausführungsform eines möglichen Frequenz-Zeit-Diagramms des Quellensignals fq das zur Erzeugung der Sendesignale der erfindungsgemäßen Vorrichtung gemäß der Figuren 1 oder 2 verwendet werden kann,
- Figur 4: eine grafische Darstellung der PN-Codefolgen und der durchzumessenden Entfernungsbereiche d über der Zeit und
- Figur 5: eine grafische Darstellung der PN-Codefolgen und der durchzumessenden Entfernungsbereiche d über der Zeit bei einer sequentiellen Ineinanderverschachtelung der Codes und
- Figur 6: eine grafische Darstellung der PN-Codefolgen und der durchzumessenden Entfernungsbereiche d über der Zeit bei einer parallelen und taktgleichen Verschachtelung der Codefolgen und
- Figur 7: eine grafische Darstellung der PN-Codefolgen und der durchzumessenden Entfernungsbereiche d über der Zeit bei einer parallelen und nicht-synchronen Verschachtelung der Codefolgen.

### Ausführungsformen der Erfindung

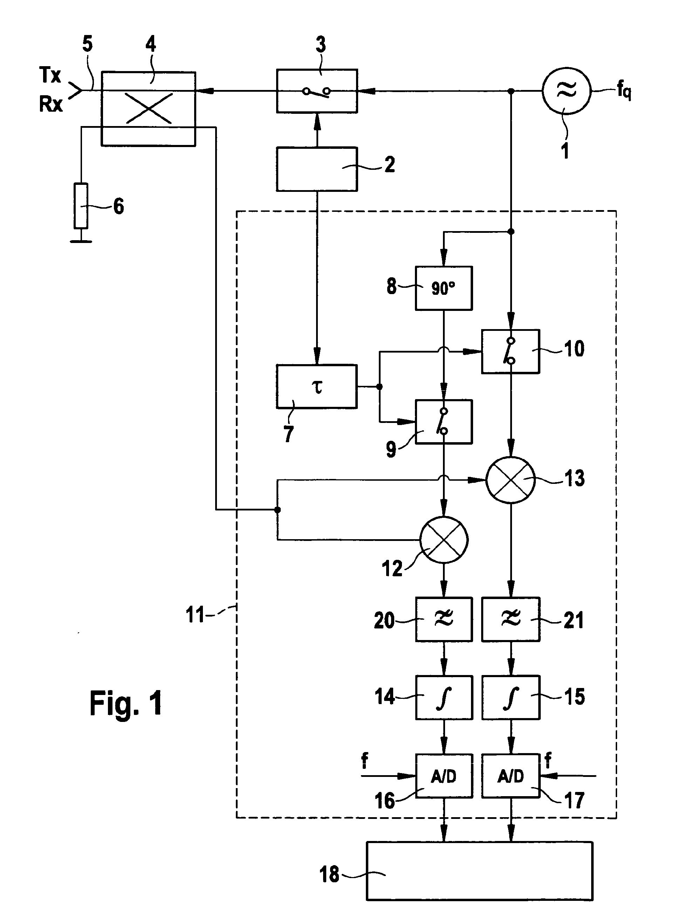

In Figur 1 ist eine mögliche Ausführungsform der erfindungsgemäßen Vorrichtung dargestellt, wobei eine Hochfrequenzquelle 1 dargestellt ist, die ein Quellensignal fq erzeugt, das beispielsweise rampenförmig von einer unteren Grenzfrequenz fᵤ zeitlich linear bis zu einer oberen Grenzfrequenz fₒ ansteigt. Während der Messung eines Distanzbereichs, vorteilhafterweise während der Messung aller Distanzbereiche, wird die Rampensteigung konstant gehalten.

Das Ausgangssignal dieser Hochfrequenzquelle 1 wird einem Sendekanalmodulator 3 zugeführt und ebenso für den Empfangskanal abgezweigt. Weiterhin ist ein PN-Codegenerator 2 vorgesehen, der einen PseudoNoise (PN)-Code erzeugt, der eine gewisse Zeitdauer besitzt und fortwährend wiederholt wird. Dieser PN-Code des PN-Code-Generators 2 wird dem Sendekanalmodulator 3 zugeführt, in dem ein Schalter im Muster des erzeugten PN-Codes öffnet und schließt, wodurch das Quellensignal fq zusätzlich zur FMCW-Modulation eine PN-Modulation aufgeprägt bekommt. Dieses PN modulierte FMCW-Signal des Sendekanalmodulators 3 wird einer Sende-/ Empfangsweiche 4 zugeführt, die das Sendesignal Tx an eine Antenne 5 weiterleitet, mittels der das Sendesignal Tx ausgesendet wird.

Da die erfindungsgemäße Vorrichtung beispielsweise in einem Kraftfahrzeug eingesetzt werden kann, wo mit dieser Vorrichtung vorherfahrende Fahrzeuge und stehende Objekte am Fahrzeugrand detektiert werden können, wird in diesem Fall das Sendesignal Tx vorteilhafter Weise in den Bereich vor dem Fahrzeug ausgestrahlt und an Objekten innerhalb dieses Erfassungsbereichs reflektiert. Die reflektierten Signale werden als Empfangssignale Rx zurückgestrahlt und ebenfalls von der Sende-/Empfangsantenne 5 empfangen.

Selbstverständlich können für die Sendesignale Tx und die Empfangssignale Rx auch mittels jeweils einer separaten Sendeantenne und Empfangsantenne ausgesandt und empfangen werden. In diesem Fall eines bistatischen Sende- und Empfangssystems entfällt gegenüber der Ausführung als monostatisches System der Duplexer, der im vorliegenden Ausführungsbeispiel durch die Sende-/Empfangsweiche 4 realisiert ist.

Da die ausgesandten und wieder empfangenen Signale aufgrund der Relativgeschwindigkeit Vr der detektierten Objekte sowohl eine Dopplerverschiebung erfahren als auch für die Dauer der Laufzeit dieser Signale die Sendefrequenz fq kontinuierlich verändert wird, weist das Empfangssignal Rx gegenüber dem Sendesignal Tx eine Frequenzverschiebung auf, die sowohl durch die FMCW-Modulation als auch durch die Dopplerverschiebung bedingt ist. Zusätzlich wird die PN-Codefolge des empfangenen Signals Rx gegenüber der PN-Codefolge des gesendeten Signals Tx verschoben, was ebenfalls durch die Laufzeit des Signals von der Antenne zum detektierten Objekt und zurück zur Antenne bedingt ist. Das Empfangssignal Rx wird von der Sende-/Empfangsweiche 4 an einen Empfangskanal weitergegeben, wobei als Sende-/Empfangsweiche 4 beispielsweise ein Leitungskoppler verwendet werden kann, der an seinem vierten Ausgang mittels eines Abschlusswiderstandes 6 mit einem geeigneten Wellenwiderstand abgeschlossen ist. Das von der Sende-/Empfangsweiche 4 abgegebene Empfangssignal wird in zwei Signale aufgeteilt, wobei der erste Kanal als Inphasensignal und der zweite Kanal als Quadraturkanal bezeichnet wird. In jedem dieser beiden Kanäle wird das Empfangssignal Rx einem Mischer 12, 13 zugeführt.

Das von der Hochfrequenzquelle 1 abgezweigte Signal wird nochmal aufgeteilt, wobei dieses einem ersten Empfangskanalmodulator 10 für den Inphasenkanal zugeführt wird und der zweite Zweig einem Phasenschieber 8 zugeführt wird, der das FMCW-modulierte Hochfrequenzsignal um einen Phasenwinkel von 90° dreht und einem zweiten Empfangskanalmodulator 9 zuführt, der für den Quadraturkanal bestimmt ist. Der erste Empfangskanalmodulator 10 und der zweite Empfangskanalmodulator 9 werden mittels einer zeitverzögerten PN-Codefolge angesteuert, wobei hierzu der dem Sendekanalmodulator 3 zugeführte PN-Code des PN-Codegenerators 2 einer Verzögerungsschaltung 7 zugeführt wird, die den PN-Code um die Zeitdauer τ verzögert, wobei die Zeitverzögerung τ der Signallaufzeit entspricht, die das Sendesignal Tx benötigt, um von der Sendeantenne 5 zum reflektierenden Objekt im momentan zu durchsuchenden Entfernungsbereich d und zurück zur Empfangsantenne 5 zu gelangen.

Das von der Verzögerungseinrichtung 7 verzögerte PN-Code-Signal wird dem ersten Empfangskanalmodulator 10 und dem zweiten Empfangskanalmodulator 9 zugeführt, die das für den Empfang abgezweigte Sendesignal ebenfalls PN-moduliert. Die Ausgangssignale des ersten Empfangskanalmodulators 10 werden dem ersten Empfangsmischer 13 des Inphasenkanals zugeführt und das Ausgangssignal des zweiten Empfangskanalmodulators 9 dem zweiten Empfangsmischer 12 im Quadraturkanal zugeführt. In den Empfangsmischern 12, 13 werden die mit der verzögerten PN-Codefolge modulierten und für den Quadraturkanal phasenverschobenen Sendesignalen mit dem Empfangssignal Rx abgemischt, wodurch Zwischenfrequenzsignale entstehen, die nachfolgend weiterverarbeitet werden. Nach der Demodulation des Inphasensignals und des Quadratursignals in den Mischern 12, 12 wird jedes Mischerausgangssignal in einem Tiefpass 20, 21 tiefpassgefiltert, um nicht relevante Frequenzspektren auszublenden. Nach der Tiefpassfilterung in den Blöcken 20, 21 ist für jeden der beiden Empfangskanäle weiterhin ein separater Integrator 14, 15 vorgesehen, der die Mischerausgangssignale der Empfangsmischer 12, 13 integrieren und nachfolgend mittels jeweils eines A/D-Wandlers 16, 17 in Digitalsignale gewandelt werden und einer Auswerteinrichtung 18 zugeführt werden. Zur Durchsuchung der unterschiedlich entfernten Entfernungsbereiche d wird in der Verzögerungseinrichtung 7 jeweils eine Verzögerungszeitdauer τ eingestellt. Durch die nachgeschalteten Integratoren wird eine Korrelation der Empfangssignale berechnet, aus der der Korrelationsgewinn für die jeweiligen, detektierten Objekte des entsprechenden Entfernungsbereichs abgeleitet werden kann.

Die A/D-Wandler 16, 17 werden hierbei mit einer Abtastfrequenz f_{abtast} betrieben, die der entsprechenden und zu erwartenden Relativgeschwindigkeit Vr der detektierten Objekte entspricht, um die gewünschte Auflösung hinsichtlich der Relativgeschwindigkeit Vr zu erreichen. Diese Abtastfrequenz f_{abtast} kann beispielsweise von der Auswerteeinrichtung 18 im vorherigen Detektionszyklus bestimmt worden sein und von dieser bereitgestellt werden. Wenn der Code des empfangenen Signals mit dem Referenzcode der Empfangskanalmodulatoren 9, 10 zeitlich übereinstimmt, was durch die Einstellung der Verzögerung τ in der Verzögerungseinrichtung 7 erreicht wird, wird auf Grund der Autokorrelationseigenschaften der PN-Folge der Korrelationsgewinn maximiert, andernfalls minimiert. Bei der Detektion eines Maximums des Korrelationsgewinns über die zeitliche Verschiebung des PN-Codes und der Kenntnis des Referenzcodes der Empfangskanalmodulatoren 9, 10 kann die Entfernung der Zielobjekte bestimmt werden. Bei zwei in der Distanz unterschiedlichen Zielen entspricht das Verhältnis zwischen minimalem Korrelationsgewinn des einen Ziels zu dem maximalen Korrelationsgewinn des anderen Ziels der Detektionsfähigkeit des Radarsensors. Bei bewegten Zielen tritt durch die Verdrehung der Phase zwischen dem Empfangssignal Rx und dem Referenzsignal der Empfangskanalmodulatoren 9, 10 auf Grund der Dopplerfrequenz sowie der zeitlich linearen Veränderung der Quellenfrequenz fq eine Verschlechterung des maximalen und des minimalen Korrelationsgewinns ein. Der maximale Korrelationsgewinn wird dabei vermindert und der minimale Korrelationsgewinn des bewegten Objekts wird vergrößert. Dies führt zusätzlich zu Verdeckungseffekten, so dass ein schwaches Ziel trotz maximalem Korrelationsgewinn von einem stark empfangenen, bewegten Ziel mit einer anderen Entfernung und somit einem schlechten minimalen Korrelationsgewinn verdeckt wird. Mit steigender Geschwindigkeit Vr sowie mit großen Rampensteigungen nimmt die Verschlechterung des Verhältnisses zwischen minimalen und maximalen Korrelationsgewinnen zu.

Das Ergebnis der Integration in den Integratoren 14, 15 repräsentiert einen komplexen Korrelationsgewinn. Durch die IQ-Zerlegung ist der Korrelationsgewinn unabhängig von der zufälligen Phasenlage zwischen dem Empfangssignal Rx und dem Referenzsignal der Empfangskanalmodulatoren 9, 10. Der Betrag des Korrelationsgewinns ist wiederum ein Maß für die Detektion eines einzelnen Ziels in dem untersuchten Entfernungsbereich d, abhängig von der Zeitverzögerung τ des Referenz-PN-Codes. Zur Ermittlung der Geschwindigkeit aller Ziele eines Entfernungsbereichs werden die Integratoren 14, 15 zeitlich mit der Abtastfrequenz f_{abtast} und einer Abtastanzahl N ausgelesen, wobei der zeitlich verzögerte PN-Code entsprechend dieser Entfernungsbereichsdistanz d mit τ verzögert wird. Die N Abtastwerte können nun mittels einer Fouriertransformation in den Frequenzbereich transformiert werden. Hierbei stellt jeder Peak im Frequenzbereich, welcher nicht durch ein starkes bewegtes Ziel einer anderen Distanz durch den minimalen Korrelationsgewinn hervorgerufen wird, ein Ziel in diesem Entfernungsbereich d dar, wobei der Frequenzpeak entsprechend der Relativgeschwindigkeit Vr ausgeprägt ist.

Die durch die strichliert gezeichnete Linie eingerahmten Schaltungsteile stellen hierbei einen Empfangskanal dar, der aus einem Inphasen- und einem Quadraturkanal besteht. Ein derartiger Empfangskanal ist in der Lage, zeitgleich nur einen Entfernungsbereich nach Objekten zu durchsuchen.

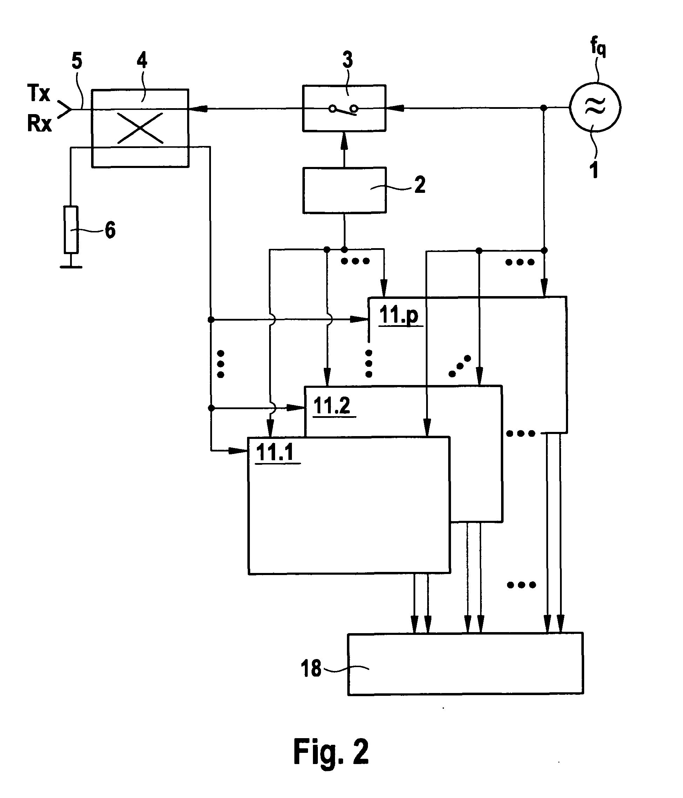

In Figur 2 ist eine weitere Ausführungsform der erfindungsgemäßen Vorrichtung dargestellt, bei der mehrere Entfernungsbereiche zeitgleich durchsuchbar sind, indem der in Figur 1 dargestellte Empfangskanal 11 mehrfach parallel vorgesehen sind und indem die PN-Codes des Code-Generators 2 und die zugehörigen Verzögerungsdauern τ des Verzögerungsglieds 7 ineinander verschachtelt werden, wie es später noch näher erläutert wird. Hierzu ist wie in Figur 1 dargestellt und beschrieben die Hochfrequenzquelle 1 dargestellt, die ein FMCW-moduliertes Signal einem Sendekanalmodulator 3 zuführt und ebenso für den Empfangskanal abgezweigt. Weiterhin ist, wie bezüglich Figur 1 beschrieben, ein PN-Codegenerator 2, eine Sende-/ Empfangsweiche 4 sowie eine Antenne 5 vorgesehen, die als monostatisches Radarsystem ausgeführt ist. Selbverständlich ist es auch in diesem Fall möglich, die erfindungsgemäße Anordnung alternativ als bistatisches Radarsystem auszuführen, das über getrennte Antennen zum Senden und Empfangen verfügt.

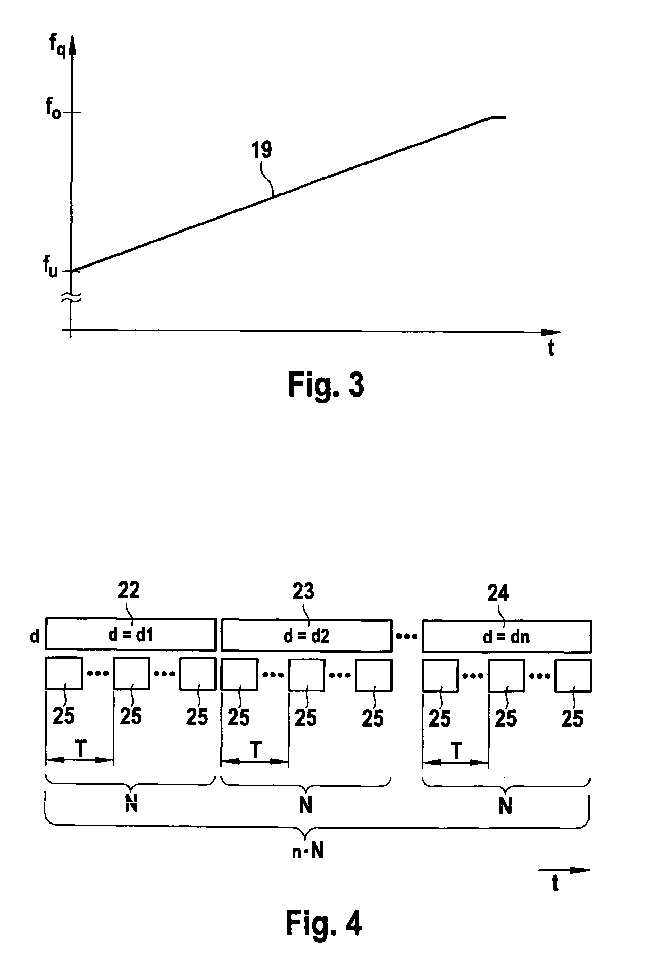

Weiterhin sind n parallelgeschaltete Empfangskanäle 11.1, 11.2 bis 11.p dargestellt, die jeweils über einen Inphasen- und einen Quadraturkanal verfügen, wie es in Figur 1 innerhalb des Empfangskanals 11 dargestellt wurde. Das Empfangssignal des Duplexers 4 wird hierbei jedem der Empfangskanäle 11.1, 11.2 bis 11.p zugeführt, ebenso wie das FMCW-modulierte Hochfrequenzsignal fq der Signalquelle 1 und der PN-Code des PN-Codegenerators 2. Jeder der Empfangskanäle 11.1, 11.2 bis 11.p erzeugt wie bezüglich Figur 1 beschrieben, jeweils ein Inphasen-Ausgangssignal und ein Quadartur-Ausgangssignal, das jeweils der Auswerteeinrichtung 18 zugeführt wird. Hierbei übernimmt jeder der Empfangskanäle 11.1, 11.2 bis 11.p jeweils die Detektion und Auswertung der Empfangssignale Rx bezüglich eines Entfernungsbereichs. Damit können gleichzeitig bis zu p Entfernungsbereiche ausgewertet werden. Weiterhin können auch mehrere Entfernungsbereiche (beispielsweise 6 Entfernungsbereiche d1 bis d6) gemessen werden, indem nur einige der Entfernungsbereiche parallel ausgewertet werden (beispielsweise 3 Entfernungsbereiche d1 bis d3 mittels 3 Empfangskanälen 11.1, 11.2, 11.3) und anschließend im nächsten Messzyklus ein weiterer Teil der Entfernungsbereiche mit den gleichen Empfangskanälen ausgewertet werden (beispielsweise 3 Entfernungsbereiche d4 bis d6 mittels der 3 Empfangskanäle 11.1, 11.2, 11.3). Hierdurch ergibt sich eine wesentlich schnellere Auswertung der in den Detektionsbereichen vorhandenen Objekte. das Verfahren hierzu wird später in Figur 4 näher erläutert.

In Figur 3 ist ein Frequenz-Zeit-Diagramm dargestellt, das die FMCW-Modulation der Hochfrequenzquelle 1 beispielhaft darstellt. Demgemäß ist eine Quellenfrequenz fq dargstellt, die über der Zeit linear von einer unteren Grenzfrequenz fᵤ ansteigt bis eine obere Grenzfrequenz fₒ erreicht ist, was durch die steigende Frequenzrampe 19 dargestellt ist. Dieses rampenförmig ansteigende Frequenzmuster wird anschließend wiederholt. Eine Veränderung der Steigung der Frequenzrampe kann hierbei ebenfalls vorgesehen sein, jedoch wird diese Veränderung der Rampensteigung vorteilhafterweise erst durchgeführt, nachdem ein Messdurchgang alle durchzumessenden Entfernungsbereiche durchlaufen hat. Alternativ kann statt einer rampenförmig ansteigenden Frequenzmodulation eine rampenförmig abfallende Frequenzmodulation durchgeführt werden. Weiterhin denkbar ist auch, dass sich ansteigende oder abfallende Frequenzrampen abwechseln.

In Figur 4 ist das Vorgehen bezüglich der Veränderung der Systemparameter über der Zeit t dargestellt, wobei in der obersten Zeile die Entfernung d dargestellt ist. So wird für die Zeitdauer des Blocks 22 der Entfernungsbereich d=d1 nach Objekten durchsucht, indem die Verzögerungszeit τ der Verzögerungseinrichtung 7 entsprechend der Signallaufzeit für Reflektionen an Objekten im Entfernungsbereich d=d1 eingestellt wird. Während dieser Zeit wiederholt sich der PN-Code 25 mehrmals, wobei die Dauer der Abtastungen des Integrationsergebnisses der Integratoren 14, 15 mittels der Abtastfrequenz f_{abtast} nur über einen Teil der PN-Code-Dauern erfolgt, was in der Zeichnung durch die Dauer T_{abtast} dargestellt ist. Während der Messzeitdauer für den Entfernungsbereich d=d1 werden demnach N Abtastungen durchgeführt, mittels denen der zeitliche Verlauf des Korrelationsgewinn der Empfangssignale bestimmt wird. Daran schließt sich wiederum das gleiche Verfahren an, wobei jedoch gemäß Block 23 der Entfernungsbereich d auf den nächsten Entfernungsbereich d=d2 durch Verändern des Verzögerungswertes τ verstellt wurde. Dieses Vorgehen wiederholt sich für die einzelnen Entfernungsbereiche, bis der letzte Entfernungsbereich d=dn, der durch Block 24 dargestellt ist, durchsucht wurde. Im Anschluss daran wiederholt sich das Durchsuchen der Entfernungsbereiche, in dem die zeitliche Verzögerung τ entsprechend dem Entfernungsbereich d=d1 wieder eingestellt wird. Hierbei werden zunächst für eine feste Distanz d der komplexe Korrelationsgewinn mit einer Abtastanzahl N und der Abtastrate f_{abtast} abgetastet. Anschließend wird für die nächste Entfernung d der Korrelationsgewinn mit einer Abtastanzahl N gemessen. Durch die wiederholte Messung des komplexen Korrelationsgewinns mit der festen Abtastrate f_{abtast} und der Abtastanzahl N kann aus dem Phasenverlauf der Werte des Korrelationsgewinns die Geschwindigkeit des detektierten Objekts bestimmt werden.

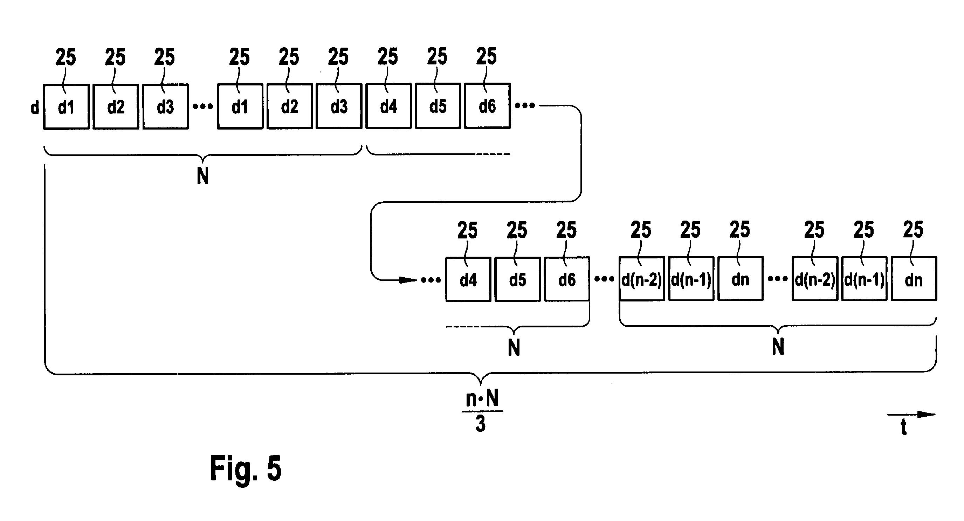

in Figur 5 ist die Ineinanderschachtelung von Messungen unterschiedlicher Entfernungsbereiche dargestellt, wie es mittels der Vorrichtung gemäß Figur 1 ausgeführt werden kann. Zu erkennen ist, dass nacheinander Codes für die sequentiell zu messenden Entfernungsbereiche generiert werden, im dargestellten Beispiel mit n=1 Empfangskanälen sind dies die Empfangsbereiche d1 bis d3. Diese Bereiche d1 bis d3 werden N-mal wiederholt und danach werden die weiteren Empfangsbereiche d= d4 bis d6 durchsucht. Auch diese Entfernungsbereiche d4 bis d6 werden zeitlich sequentiell und N-mal hintereinander wiederholt. Dieses Muster wird fortgeführt, bis der n-te Entfernungsbereich d durchsucht wurde. Dadurch ergibt sich, dass wieder n·N Abtastwerte bestimmt werden. Die Zeitdauer der Messung verkürzt sich hierbei auf (n·N)/3.

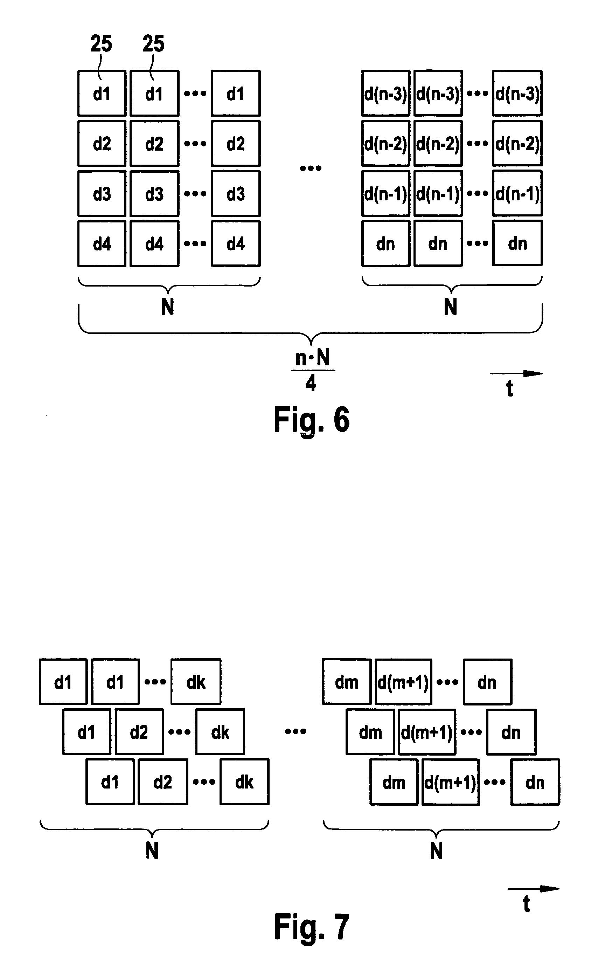

In Figur 6 ist eine grafische Darstellung der Codefolgen bei einer mehrkanaligen, parallelen Auswertung dargestellt, wie es beispielsweise mit der Vorrichtung gemäß Figur 2 ausgeführt werden kann. Es wurden wiederum Codefolgen 25 über der Zeit aufgetragen, wobei in diesem Beispiel 4 Kanäle 11.1 bis 11.4 im Empfänger vorgesehen sind. Dabei werden N-mal hintereinander die ersten 4 Entfernungsbereiche d= d1 bis d4 mittels der generierten Codefolgen ausgesendet, wobei jeder Kanal die gleiche Codefolge N-mal hintereinander sendet. Anschließend werden immer die nächsten 4 Entfernungsbereiche durchgemessen, bis der Entfernungsbereich d=dn ebenfalls N-mal durchsucht wurde. Dabei wurden in einem vollständigen Zyklus n unterschiedliche Entfernungsbereiche N-mal durchsucht, wobei durch die 4 Kanäle sich eine Zeitdauer von (n-N)/4 Codefolgen ergibt. Diese werden parallel in den p Empfangkanälen, also im Beispiel in den Kanälen 11.1, 11.2 und 11.3 parallel ausgewertet, indem jedem Empfangskanal die entsprechenden PN-Codes und die jeweilige Laufzeitverzögerung τ= τ1 bis τ3 zugeführt werden. Diese Codes und Messentfernungen können sich hierbei mehrfach, beispielsweise N-mal wiederholen, wobei in jedem Kanal die Integratoren fortlaufend aufsummieren. Anschließend werden die weiteren Entfernungsbereiche d=d4 bis d6 parallel ausgewertet, indem den Empfangskanälen 11.1, 11.2 und 11.3 wiederum die entsprechenden PN-Codes und die jeweilige Laufzeitverzögerung τ= τ4 bis τ6 zugeführt werden und damit diese Entfernungsbereiche ausgewertet werden, wobei sich auch hierbei die Messungen in den jeweiligen Entfernungsbereichen N-mal wiederholen. Die Anzahl der Empfangskanäle 11.p kann hierbei bis zur Anzahl der Entfernungsbereiche p erhöht werden, wobei in diesem Fall alle Entfernungsbereiche parallel ausgewertet werden.

In Figur 7 ist eine weitere Variante der Codeanordnung dargestellt, bei der eine sequentielle Verschachtelung wie gemäß Figur 5 und eine parallele Verarbeitung gemäß Figur 6 miteinander kombiniert wurden, und zusätzlich eine nichtsynchrone Abfolge der Codefolgen in den mehreren Kanäle vorgesehen ist, so dass zwar jeder Kanal über der Zeit das gleiche Muster an Codefolgen 25 sendet, diese jedoch um einen gewissen Zeitversatz versetzt sind.

## Patentansprüche

1. Verfahren zur Bestimmung der Relativgeschwindigkeit von Objekten mittels ausgesendeter und empfangener Mikrowellenstrahlung, wobei das Sendesignal eine Trägerfrequenz (f_{T}) aufweist, die rampenförmig erhöht (19) oder verringert (21) wird, wobei das Sendesignal (Tx) zusätzlich mittels einer PN-Codefolge moduliert wird (3) und das Empfangssignal (Rx) mit der zeitlich verzögerten PN-Codefolge gemischt (12,13) wird und zur Bildung eines komplexen Korrelationsgewinns integriert (14,15) wird, wobei die Relativgeschwindigkeit (Vr) der Objekte aus dem zeitlichen Verlauf des Korrelationsergebnisses der gemischten und integrierten Empfangssignale bestimmt wird, wobei ein erster und wenigstens ein sich an den ersten Messzyklus anschließender zweiter Messzyklus vorgesehen sind, **dadurch gekennzeichnet, dass** zur parallelen Untersuchung unterschiedlicher Entfernungsbereiche mehrere Empfangskanäle (11.1, 11.2, 11.p) bereitgestellt werden, wobei in dem ersten Messzyklus nur einige der Entfernungsbereiche (d1, d2, d3) parallel ausgewertet werden, wobei in dem zweiten Messzyklus ein weiterer Teil der Entfernungsbereiche (d4, d5, d6) parallel ausgewertet wird, wobei zur Auswertung des jeweiligen Entfernungsbereichs (d1, d2, dn) die PN-Codefolge variabel um eine Verzögerungszeit entsprechend zum Entfernungsbereich (d1, d2, dn) versetzt eingestellt und dem entsprechenden Empfangskanal (11.1, 11.2, 11.p) zugeführt wird.

2. Verfahren nach Anspruch 1, **dadurch gekennzeichnet, dass** zusätzlich der Abstand der Objekte bestimmt wird indem die Entfernung (d) der Objekte aus der zeitlichen Verzögerung (τ) der empfangenen PN-Codefolge in Bezug auf die gesendete PN-Codefolge bestimmt wird.

3. Verfahren nach Anspruch 1 oder 2, **dadurch gekennzeichnet, dass** die zeitliche Verzögerung (τ) des PN-Codes derart verändert wird, dass unterschiedliche Entfernungsbereiche (d) stufenweise nacheinander nach Objekten durchsucht werden.

4. Verfahren nach einem der vorhergehenden Ansprüche, **dadurch gekennzeichnet, dass** das Korrelationsergebnis eines Entfernungsbereichs (d) mit einer Abtastfrequenz f_{abtast} abgetastet wird.

5. Verfahren nach Anspruch 4, **dadurch gekennzeichnet, dass** sich die Abtastfrequenz f_{abtast} in Abhängigkeit der maximalen Dopplerfrequenzverschiebung infolge der Relativgeschwindigkeit der Objekte, der absoluten Geschwindigkeit, der Distanz der Objekte und der Rampensteigung des FMCW-Signals bestimmt.

6. Verfahren nach einem der vorhergehenden Ansprüche, **dadurch gekennzeichnet, dass** das Empfangssignal und die verzögerte PN-Codefolge einem Inphasenkanal und einem Quadraturkanal zugeführt werden, wobei die verzögerte PN-Codefolge des Quadraturkanals gegenüber der verzögerten PN-Codefolge des Inphasenkanals um 90° verdreht ist und in jedem Kanal getrennt eine Abmischung, Integration und Bestimmung des Korrelationsgewinns durchgeführt wird.

7. Verfahren nach Anspruch 6, **dadurch gekennzeichnet, dass** aus den Korrelationsergebnissen des Inphasenkanals und des Quadraturkanals eines jeden Entfernungsbereichs ein komplexer Korrelationsgewinn bestimmt wird, der mittels einer Fouriertransformation in den Frequenzbereich transformiert wird.

8. Verfahren nach Anspruch 7, **dadurch gekennzeichnet, dass** jedem Maximum des fouriertransformierten Frequenzspektrums jeweils ein Objekt und dessen Relativgeschwindigkeit zugeordnet werden kann.

9. Verfahren nach einem der vorhergehenden Ansprüche, **dadurch gekennzeichnet, dass** aus dem Verlauf der Phase des Korrelationsgewinns des Inphasenkanals und des Korrelationsgewinns des Quadraturkanals die Relativgeschwindigkeit des detektierten Fahrzeugs bestimmt wird.

10. Verfahren nach einem der vorhergehenden Ansprüche, **dadurch gekennzeichnet, dass** mehrere Empfangskanäle (11) parallel angeordnet sind, wobei jeder Empfangskanal einen Entfernungsbereich auswertet und damit zeitgleich Objekte in mehreren Entfernungsbereichen parallel detektiert und ausgewertet werden können.

11. Verfahren nach einem der vorhergehenden Ansprüche, **dadurch gekennzeichnet, dass** die PN-Codes der parallel auswertenden Empfangskanäle (11.1, 11.2, 11.p) der unterschiedlichen Entfernungsbereiche (d1, d2, dn) mehrmals hintereinander wiederholt (N-mal) und jeder Empfangskanal (11.1, 11.2, 11.p) über alle PN-Codes des durch ihn auszuwertenden Empfangsbereichs integriert werden.

12. Vorrichtung zur Bestimmung der Relativgeschwindigkeit von Objekten mittels ausgesendeter und empfangener Mikrowellenstrahlung, wobei die Vorrichtung Mittel zur Erzeugung einer Trägerfrequenz (f_{T}) aufweist, die in ihrer Frequenz rampenförmig erhöht und verringert wird, dass die Vorrichtung Mittel zur Erzeugung einer PN-Codefolge aufweist, mit denen das Sendesignal und das Empfangssignal zusätzlich PN-moduliert wird und die Vorrichtung eine Einrichtung zur zeitlichen Verzögerung des PNmodulierten und rampenförmig modulierten Empfangssignals aufweist, dass die Vorrichtung mindestens eine Mischeinrichtung aufweist, mittels der das Empfangssignal mit dem zeitlich verzögerten Sendesignal gemischt wird und anschließend in einem Integrator zur Berechnung eines Korrelationsgewinns integriert wird, wobei die Relativgeschwindigkeit der Objekte aus dem zeitlichen Verlauf des Korrelationsergebnisses der gemischten und integrierten Empfangssignale bestimmt wird, wobei ein erster und wenigstens ein sich an den ersten Messzyklus anschließender zweiter Messzyklus vorgesehen sind, **dadurch gekennzeichnet, dass** zur parallelen Untersuchung unterschiedlicher Entfernungsbereiche mehrere parallele Empfangskanäle (11.1, 11.2, 11.p) vorgesehen sind, die ausgelegt sind, in dem ersten Messzyklus nur einige der Entfernungsbereiche (d1, d2, d3) und in dem zweiten Messzyklus einen weiterer Teil der Entfernungsbereiche (d4, d5, d6) parallel auszuwerten, wobei zur Auswertung des jeweiligen Entfernungsbereichs (d1, d2, dn) die PN-Codefolge variabel um eine Verzögerungszeit durch eine Verzögerungseinrichtung (7) entsprechend zum Entfernungsbereich (d1, d2, dn) einstellbar ist und versetzt dem entsprechenden Empfangskanal (11.1, 11.2, 11.p) zugeführt wird.

13. Vorrichtung nach Anspruch 12, **dadurch gekennzeichnet, dass** zusätzlich die Verzögerungseinrichtung (7) zur Bestimmung des Abstands der Objekte ausgelegt ist, indem die Entfernung (d) der Objekte aus der zeitlichen Verzögerung (τ) der empfangenen PN-Codefolge in Bezug auf die gesendete PN-Codefolge bestimmt wird.

14. Vorrichtung nach Anspruch 12 oder 13, **dadurch gekennzeichnet, dass** die Vorrichtung zur Verarbeitung des Empfangssignals einen Inphasenkanal und einen Quadraturkanal aufweist, und eine Auswerteeinrichtung die Phasen des Inphasenkanalsignals und des Quadraturkanalsignals bestimmt und aus dessen Verlauf die Relativgeschwindigkeit der detektierten Objekte ermittelt.

## Claims

1. Method for determining the relative speed of objects by means of transmitted and received microwave radiation, the transmitted signal having a carrier frequency (f_{T}) which is increased (19) or decreased (21) in a ramp-shaped fashion, the transmitted signal (Tx) additionally being modulated (3) by means of a PN code sequence and the received signal (Rx) being mixed (12, 13) with the time-delayed PN code sequence and integrated (14, 15) to form a complex correlation gain, the relative speed (Vr) of the objects being determined from the time profile of the correlation result of the mixed and integrated received signals, there being provided a first and at least a second measurement cycle following the first measurement cycle, **characterized in that** a plurality of receiving channels (11.1, 11.2, 11.p) are provided for parallel investigation of different distance ranges, only some of the distance ranges (d1, d2, d3) being evaluated in parallel in the first measurement cycle, a further portion of the distance ranges (d4, d5, d6) being evaluated in parallel in the second measurement cycle, and for the purpose of evaluating the respective distance range (d1, d2, dn) the PN code sequence being variably set in a fashion offset by a delay time corresponding to the distance range (d1, d2, dn) and fed to the corresponding receiving channel (11.1, 11.2, 11.p).

2. Method according to Claim 1, **characterized in that** the distance of the objects is determined in addition by determining the distance (d) of the objects from the time delay (τ) of the received PN code sequence with reference to the transmitted PN code sequence.

3. Method according to Claim 1 or 2, **characterized in that** the time delay (τ) of the PN code is varied in such a way that different distance ranges (d) are searched for objects sequentially step by step.

4. Method according to one of the preceding claims, **characterized in that** the correlation result of a distance range (d) is scanned at a scanning frequency f_{abtast}.

5. Method according to Claim 4, **characterized in that** the scanning frequency f_{abtast} is determined as a function of the maximum Doppler frequency shift as a consequence of the relative speed of the objects, the absolute speed, the distance of the objects and the ramp gradient of the FMCW signal.

6. Method according to one of the preceding claims, **characterized in that** the received signal and the delayed PN code sequence are fed to an in-phase channel and a quadrature channel, the delayed PN code sequence of the quadrature channel being rotated by 90° by comparison with the delayed PN code sequence of the in-phase channel, and a demixing, integration and determination of the correlation gain being carried out separately in each channel.

7. Method according to Claim 6, **characterized in that** there is determined from the correlation results of the in-phase channel and the quadrature channel of each distance range a complex correlation gain which is transformed into the frequency domain by means of a Fourier transformation.

8. Method according to Claim 7, **characterized in that** each maximum of the Fourier-transformed frequency spectrum can respectively be assigned an object and the relative speed thereof.

9. Method according to one of the preceding claims, **characterized in that** the relative speed of the detected vehicle is determined from the profile of the phase of the correlation gain of the in-phase channel and the correlation gain of the quadrature channel.

10. Method according to one of the preceding claims, **characterized in that** a plurality of receiving channels (11) are arranged in parallel, each receiving channel evaluating a distance range and it thereby being possible for objects in a plurality of distance ranges to be detected and evaluated in parallel at the same time.

11. Method according to one of the preceding claims, **characterized in that** the PN codes of the parallel evaluating receiving channels (11.1, 11.2, 11.p) of the different distance ranges (d1, d2, dn) are repeated multiply in sequence (N times), and each receiving channel (11.1, 11.2, 11.p) is integrated over all PN codes of the distance range to be evaluated by it.

12. Device for determining the relative speed of objects by means of transmitted and received microwave radiation, the device having means for generating a carrier frequency (f_{T}) which is increased and decreased in its frequency in a ramp-shaped fashion, the device having means for generating a PN code sequence with which the transmitted signal and the received signal are additionally PN modulated, the device having an apparatus for time-delaying the received signal, which has been PN-modulated and modulated in a ramp-shaped fashion, and the device having at least one mixer by means of which the received signal is mixed with the time-delayed transmitted signal and subsequently integrated in an integrator in order to calculate a correlation gain, the relative speed of the objects being determined from the time profile of the correlation result of the mixed and integrated received signals, and a first measurement cycle and at least a second measurement cycle following the first measurement cycle being provided, **characterized in that** for the purpose of parallel investigation of different distance ranges a plurality of parallel receiving channels (11.1, 11.2, 11.p) are provided which are designed to evaluate in parallel in the first measurement cycle only some of the distance ranges (d1, d2, d3), and in the second measurement cycle a further portion of the distance ranges (d4, d5, d6), and for the purpose of evaluating the respective distance range (d1, d2, dn) it being possible to use a delay element (7) to set the PN code sequence variably by a delay time in accordance with the distance range (d1, d2, dn), which PN code sequence is fed with an offset to the corresponding receiving channel (11.1, 11.2, 11.p).

13. Device according to Claim 12, **characterized in that** the delay element (7) is additionally designed to determine the distance of the objects by virtue of the fact that the distance (d) of the objects is determined from the time delay (τ) of the received PN code sequence with reference to the transmitted PN code sequence.

14. Device according to Claim 12 or 13, **characterized in that** for the purpose of processing the received signal the device has an in-phase channel and a quadrature channel, and an evaluation device determines the phases of the in-phase channel signal and of the quadrature channel signal and determines the relative speed of the detected objects from the profile thereof.

## Revendications

1. Procédé de détermination de la vitesse relative d'objets au moyen d'un rayonnement à hyperfréquences émis et reçu, le signal émis présentant une fréquence porteuse (f_{T}) qui est augmentée (19) ou diminuée (21) en forme de rampe, le signal émis (Tx) étant en plus modulé (3) au moyen d'une séquence de codes PN et le signal reçu (Rx) étant mélangé (12, 13) avec la séquence de codes PN retardée dans le temps et intégré (14, 15) pour former un gain de corrélation complexe, la vitesse relative (Vr) des objets étant déterminée à partir du tracé dans le temps du résultat de la corrélation des signaux reçus mélangés et intégrés, un premier et au moins un deuxième cycle de mesure se rattachant au premier cycle de mesure étant prévus, **caractérisé en ce que** plusieurs canaux de réception (11.1, 11.2, 11.p) sont mis à disposition pour l'analyse en parallèle de différentes zones d'éloignement, seules quelques-unes des zones d'éloignement (d1, d2, d3) étant interprétées en parallèle au cours du premier cycle de mesure, une partie supplémentaire des zones d'éloignement (d4, d5, d6) étant interprétée en parallèle au cours du deuxième cycle de mesure, la séquence de codes PN étant réglée avec un décalage variable d'un temps de retard correspondant à la zone d'éloignement (d1, d2, dn) en vue de l'interprétation de la zone d'éloignement (d1, d2, dn) correspondante et acheminée au canal de réception (11.1, 11.2, 11.p) correspondant.

2. Procédé selon la revendication 1, **caractérisé en ce que** la distance des objets est en plus déterminée en déterminant l'éloignement (d) des objets à partir du retard dans le temps (τ) de la séquence de codes PN reçue par rapport à la séquence de codes PN émise.

3. Procédé selon la revendication 1 ou 2, **caractérisé en ce que** le retard dans le temps (τ) de la séquence de codes PN est modifié de telle sorte que différentes zones d'éloignement (d) sont analysées l'une après l'autre par palier à la recherche d'objets.

4. Procédé selon l'une des revendications précédentes, **caractérisé en ce que** le résultat de la corrélation d'une zone d'éloignement (d) est échantillonné avec une fréquence d'échantillonnage f_{abtast}.

5. Procédé selon la revendication 4, **caractérisé en ce que** la fréquence d'échantillonnage f_{abtast} est déterminée en fonction du décalage de fréquence par effet Doppler maximal résultant de la vitesse relative des objets, de la vitesse absolue, de la distance des objets et de la pente de la rampe du signal FMCW.

6. Procédé selon l'une des revendications précédentes, **caractérisé en ce que** le signal reçu et la séquence de codes PN retardée sont acheminés à un canal en phase et un canal en quadrature, la séquence de codes PN retardée du canal en quadrature étant pivotée de 90° par rapport à la séquence de codes PN retardée du canal en phase et un mélange, une intégration et une détermination du gain de corrélation étant effectués séparément dans chaque canal.

7. Procédé selon la revendication 6, **caractérisé en ce qu'**à partir des résultats de la corrélation du canal en phase et du canal en quadrature de chaque zone d'éloignement est déterminé un gain de corrélation complexe qui est transformé en une plage de fréquences au moyen d'une transformation de Fourier.

8. Procédé selon la revendication 7, **caractérisé en ce qu'**un objet et sa vitesse relative peuvent à chaque fois être associés à chaque maximum du spectre de fréquences ayant subit une transformée de Fourier.

9. Procédé selon l'une des revendications précédentes, **caractérisé en ce que** la vitesse relative du véhicule détecté est déterminée à partir du tracé de la phase du gain de corrélation du canal en phase et du gain de corrélation du canal en quadrature.

10. Procédé selon l'une des revendications précédentes, **caractérisé en ce que** plusieurs canaux de réception (11) sont disposés en parallèle, chaque canal de réception interprétant une zone d'éloignement et les objets isochrones peuvent ainsi être détectés et interprétés en parallèle dans plusieurs zones d'éloignement.

11. Procédé selon l'une des revendications précédentes, **caractérisé en ce que** les codes PN des canaux de réception (11.1, 11.2, 11.p) interprétés en parallèle des différentes zones d'éloignement (d1, d2, dn) sont répétés plusieurs fois (N fois) les uns après les autres et chaque canal de réception (11.1, 11.2, 11.p) est intégré sur tous les codes PN de la zone d'éloignement à interpréter par lui.

12. Dispositif pour déterminer la vitesse relative d'objets au moyen d'un rayonnement à hyperfréquences émis et reçu, le dispositif présentant des moyens pour générer une fréquence porteuse (f_{T}) dont la valeur de la fréquence est augmentée et diminuée en forme de rampe, le dispositif présentant des moyens pour générer une séquence de codes PN avec laquelle le signal émis et le signal reçu sont en plus soumis à une modulation PN, le dispositif présentant un dispositif pour retarder dans le temps le signal reçu modulé PN et modulé en forme de rampe, et le dispositif présentant au moins un dispositif mélangeur au moyen duquel le signal reçu est mélangé avec le signal émis retardé dans le temps et étant ensuite intégré dans un intégrateur pour calculer un gain de corrélation, la vitesse relative des objets étant déterminée à partir du tracé dans le temps du résultat de la corrélation des signaux reçus mélangés et intégrés, un premier et au moins un deuxième cycle de mesure se rattachant au premier cycle de mesure étant prévus, **caractérisé en ce que** plusieurs canaux de réception (11.1, 11.2, 11.p) sont prévus pour l'analyse en parallèle de différentes zones d'éloignement, lesquels sont conçus pour interpréter en parallèle quelques-unes seulement des zones d'éloignement (d1, d2, d3) au cours du premier cycle de mesure et une partie supplémentaire des zones d'éloignement (d4, d5, d6) au cours du deuxième cycle de mesure, la séquence de codes PN pouvant être réglée par un dispositif de retard (7) de manière variable d'un temps de retard correspondant à la zone d'éloignement (d1, d2, dn) en vue de l'interprétation de la zone d'éloignement (d1, d2, dn) correspondante et étant acheminée avec un décalage au canal de réception (11.1, 11.2, 11.p) correspondant.

13. Dispositif selon la revendication 12, **caractérisé en ce que** le dispositif de retard (7) est en plus conçu pour déterminer la distance des objets en déterminant l'éloignement (d) des objets à partir du retard dans le temps (τ) de la séquence de codes PN par rapport à la séquence de codes PN émise.

14. Dispositif selon la revendication 12 ou 13, **caractérisé en ce que** le dispositif de traitement du signal reçu présente un canal en phase et un canal en quadrature et un dispositif d'interprétation détermine les phases du signal du canal en phase et du signal du canal en quadrature et détermine la vitesse relative des objets détectés à partir de leur tracé.
